Europäisches Patentamt

European Patent Office

Office européen des brevets

(19)

(11) Numéro de publication : **0 278 871 B1**

(12) **FASCICULE DE BREVET EUROPEEN**

(45) Date de publication du fascicule du brevet :
**08.01.92 Bulletin 92/02**

(51) Int. Cl.⁵ : **A21D 13/08, A21D 15/00**

(21) Numéro de dépôt : **88400314.6**

(22) Date de dépôt : **11.02.88**

(54) **Procédé et dispositif de fabrication d'une tarte aux fruits renversée.**

(30) Priorité : **12.02.87 FR 8701764**

(43) Date de publication de la demande :
**17.08.88 Bulletin 88/33**

(45) Mention de la délivrance du brevet :
**08.01.92 Bulletin 92/02**

(84) Etats contractants désignés :
**AT BE CH DE ES FR GB GR IT LI LU NL SE**

(56) Documents cités :
**DE-A- 1 953 179**
**DE-A- 2 030 877**
**US-A- 3 031 309**

(73) Titulaire : **GRINGOIRE-BROSSARD Société dite:**
**14 avenue de la République**
**F-45300 Pithiviers (FR)**

(72) Inventeur : **Lucas, André**
**16, route d'Yèvre-le-Chatel Dadonville**
**F-45300 Pithiviers (FR)**

(74) Mandataire : **Kügele, Bernhard et al**
**NOVAPAT-CABINET CHEREAU 63 bis,**
**boulevard Bessières**
**F-75017 Paris (FR)**

## Description

La présente invention a pour objet un procédé de fabrication d'une tarte renversée constituée d'un fond de tarte et d'une garniture déposée au fond d'un moule, une séparation étant arrangée entre la garniture et une pâte constituant le fond de tarte afin de limiter les échanges entre la pâte et la garniture.

On sait réaliser industriellement des tartes garnies aux fruits en déposant dans un moule successivement un fond de tarte préalablement cuit sur lequel on a déposé des fruits et, éventuellement, une crème, un gélifiant. Un tel produit a une durée de conservation faible de l'ordre de deux semaines malgré une pasteurisation et des emballages tels que décrits dans les brevets français 80/14804 et 81/00223. D'autre part, sur le plan organoleptique, ces produits ne présentent pas une stabilité suffisante.

Le brevet DE-A-1953179 expose un procédé de fabrication d'une tarte avec une garniture à base de fruits comportant des masses gélifiées et une pâte cuite. De façon à éviter que les masses gélifiées deviennent moulées, on interpose une séparation constituée par blanc d'oeuf et papier d'hostie. Le blanc d'oeuf est dénaturé pendant la stérilisation et de cette façon imperméabilise le papier d'hostie.

Le brevet DE-A-2030877 expose un procédé de fabrication d'une pizza et le procédé pour la stériliser après son emballage dans un sachet en film plastique.

L'invention propose un procédé de fabrication de tartes renversées aux fruits palliant ces inconvénients.

Le procédé se caractérise par les étapes suivantes :
- on dépose une garniture à base de fruits crus au fond du moule ;
- on y superpose une séparation imperméable ;
- on y superpose une pâte molle et crue ;
- on cuit l'ensemble à une température comprise entre environ 180 et 210°C pendant une période comprise entre environ 45 et 55 mn ;
- on emballe les produits dans leur(s) moule(s) de cuisson ;
- on stérilise l'ensemble emballé.

De façon à éviter les réactions de neutralisation entre pâte et fruits dont les pH varient de 3,2 à 4,5 pour les fruits et de 5,5 à 7 pour la pâte, on interpose la séparation imperméable ou imperméabilisée qui limite les échanges. La séparation peut être constituée par une substance comestible telle qu'une gaufrette ou hostie imperméabilisée ou d'une substance non comestible constituée par le fond d'un second moule, soit en matériau plastique à caractère alimentaire ou en métal portant une couche en plastique du côté de la garniture, par exemple du type vinylique.

Dans le cas de la séparation d'une substance comestible imperméabilisée, cette imperméabilisation peut être obtenue par pulvérisation de cire alimentaire de carnauba par exemple, sur la surface de la gaufrette. D'autres séparations comestibles pourraient être utilisées.

Une telle autre séparation comestible peut être constituée par une substance du type papier d'hostie enduit sur les deux faces d'un système hydrophobe, lui-même constitué de deux parties :
a) une émulsion des matières grasses, en particulier végétales, d'émulsifiant et d'alginate de sodium et,
b) une solution de lactate de calcium pulvérisée sur ladite émulsion pour former un alginate de calcium insoluble et thermostable.

Le procédé prévoit également la réalisation d'une séparation mécanique de la pâte et des fruits à l'aide d'un deuxième moule

De façon à prendre en compte le retrait de la pâte à la cuisson il est évident que le diamètre de la pâte crue est supérieur au diamètre de la garniture de fruits.

Le dispositif permettant la mise en oeuvre du procédé est un moule qui présente à sa partie inférieure un premier diamètre et à sa partie supérieure un deuxième diamètre supérieur au premier.

Le dispositif peut comporter un deuxième moule d'un diamètre très légèrement inférieur au deuxième diamètre du premier moule et supérieur au premier diamètre de la partie inférieure du premier moule de façon que le deuxième moule repose sur le bord de la partie inférieure du premier moule. Ce deuxième moule peut être réalisé en papier d'hostie.

Ainsi les fruits sont-ils isolés de l'air par la pâte elle-même ou par la paroi mécanique, la pasteurisation classique permet donc d'obtenir des durées de conservation supérieures allant jusqu'à 6 mois. Les propriétés organoleptiques sont parfaitement conservées par la suppression des échanges entre fruits et pâte, donc par suppression des réactions de neutralisation.

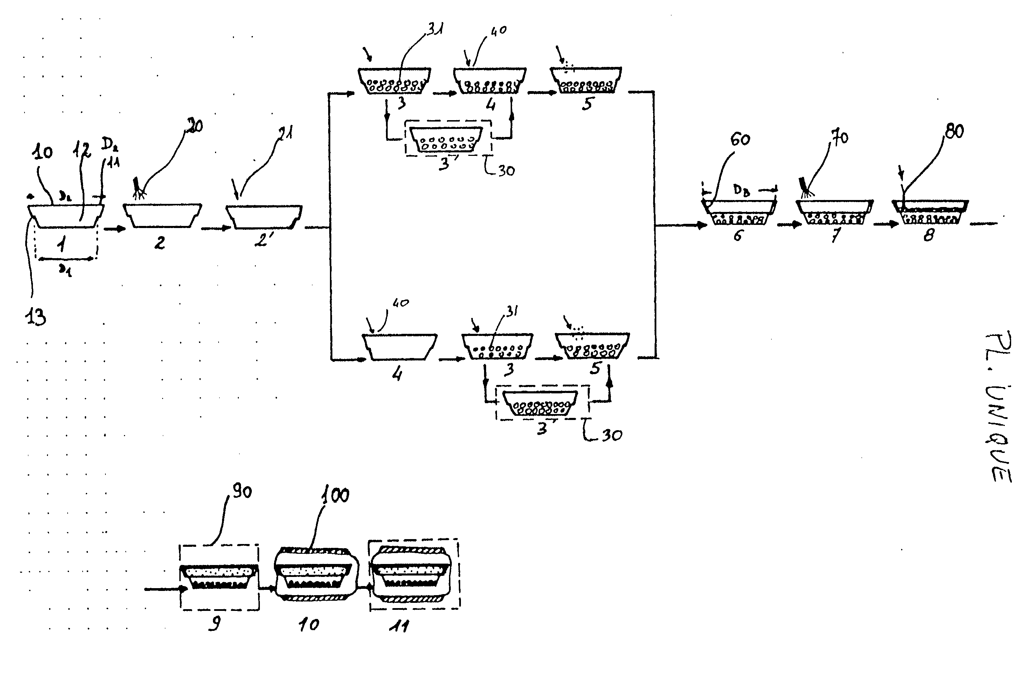

D'autres avantages et caractéristiques apparaîtront à la lecture de la description d'un mode de réalisation qui va suivre en accord avec la figure unique qui représente le synoptique de fabrication selon le procédé de l'invention. Un tel exemple ne saurait être limitatif du procédé et du dispositif selon l'invention.

L'étape 1 consiste en la présentation du moule 10 dans la chaîne de fabrication. Le diamètre D2 de la partie supérieure 11 est supérieur au diamètre D1 de la partie inférieure 12, cette variation de diamètre s'opérant dans un plan horizontal sur une faible hauteur de façon à obtenir un bord 13 entre les parties supérieure 11 et inférieure 12 du premier moule 10. Les deux cylindres superposés peuvent, de façon préférentielle, être de forme tronconique pour aider au démoulage. Les moules utilisés pour ce procédé de fabrication sont des moules non réutilisables. Ils peuvent être en métal recouvert, du côté des fruits, d'une matière plastique par exemple du type vinylique à caractère alimentaire. Ils peuvent être également en matière plastique dans leur totalité, la matière plastique étant à caractère alimentaire.

Les étapes 2 et 2' ont trait au système démoulant qui s'effectue en deux temps :

L'étape 2, tout d'abord, consiste à ajouter un adjuvant de démoulage 20 à base d'émulsifiant alimentaire, avec de l'acide citrique et de l'eau, ceci pour permettre un bon démoulage du gel.

Puis l'étape 2' qui consiste à apporter à la solution, un mélange gélifiant 21 composé, entre autre, d'alginate et de pectine, de sucre, de sel de calcium et d'eau, ceci pour durcir le gel.

Les fruits (31) sont alors déposés au fond du moule. Deux types de fruits peuvent être utilisés suivant qu'ils sont frais (étape 3) ou congelés (étape 3').

Dans ce cas de fruits frais, l'étape suivante est directement l'étape 4 qui consiste à additionner le sucre mélangé au gélifiant (40).

Dans le cas de fruits congelés, la décongélation (3') est obtenue par passage dans un tunnel (30) avec chauffage par hyperfréquences, solution qui présente l'avantage d'être très rapide et de ne pas altérer le fruit.

Les étapes 3 et 4 peuvent être inversées. Dans le cas de fruits congelés, lorsque l'étape 4 précède l'étape 3, l'étape 3' suivra l'étape 3, suivie elle-même par l'étape 5 ci-dessous décrite.

L'étape 5 est facultative et concerne l'adjonction éventuelle d'arômes, d'épices et de stabilisant tel que la glycérine.

Le procédé est complété à l'étape 6 par le dépôt d'un deuxième moule (60) amovible dont le diamètre (D3) est légèrement inférieur au diamètre (D2) et supérieur au diamètre (D1) de façon à ce que le moule (60) prenne appui sur le bord (13) de la partie inférieure (12). La différence entre (D3) et (D1) est fonction du retrait de la pâte lors de la cuisson. Ce moule est revêtu à l'extérieur d'une matière plastique du type vinylique afin de ne pas être soumis aux attaques acides des fruits.

L'agent de démoulage (70) projeté en (7) à l'intérieur du deuxième moule (60) facilitera le démoulage de la pâte après cuisson.

Cette pâte (80) est déposée à l'étape 8 dans le deuxième moule. Cette pâte molle du type pâte à madeleine comprend essentiellement de la farine, du sucre, des oeufs, de la matière grasse et de la poudre à lever. L'ensemble des deux moules et de leurs contenus est placé dans une enceinte de cuisson (90) en (9). Le mode de cuisson reste classique et utilise indifféremment les rayonnements infrarouges obtenus par chauffage gaz ou électrique ou l'air chaud circulant dans les parois, mais aussi les hyperfréquences.

Les étapes suivantes 10 et 11 concernent respectivement le conditionnement hermétique dans un sachet en film plastique (100) puis la stérilisation par pasteurisation à l'aide d'infrarouge (130° pendant 5 mn) ou à l'aide d'un étuvage (105° pendant 15 mn).

Le consommateur a donc, à sa disposition, un produit d'une mise en oeuvre très simple, puisqu'il s'agit, pour obtenir le produit final, de :
— démouler par renversement la pâte cuite du deuxième moule par retournement de celui-ci sur le plat de présentation ;
— prendre le fond de tarte et lui faire subir un nouveau renversement pour l'installer sur les fruits maintenus par le gélifiant en faisant correspondre les conicités ;
— renverser alors le premier moule sur le plat de présentation ;
— retirer le moule.

## Revendications

1. Procédé de fabrication d'une tarte renversée constituée d'un fond de tarte et d'une garniture déposée au fond d'un moule, une séparation étant arrangée entre la garniture et une pâte, constituant le fond de tarte afin de limiter les échanges entre la pâte et la garniture, caractérisé en ce que :
   • l'on dépose une garniture à base de fruits crus au fond du moule ;
   • l'on y superpose une séparation imperméable ou imperméabilisée ;
   • l'on y superpose une pâte molle et crue ;
   • l'on cuit l'ensemble à une température comprise entre environ 180° et 210° C pendant une période comprise entre environ 45 et 55 mn ;
   • l'on emballe les produits dans leur(s) moule(s) de cuisson ;
   • l'on stérilise l'ensemble emballé.

2. Procédé selon la revendication 1, caractérisé en ce que la séparation imperméable ou imperméabilisée se constitue d'au moins un des éléments suivants :
   • le fond d'un second moule en matière plastique à caractère alimentaire ou en métal revêtu au moins du côté garniture d'une couche en matière plastique du type vinylique ;
   • d'un papier d'hostie enduit sur les deux faces d'un système hydrophobe, lui-même constitué de deux parties :
      a) une émulsion des matières grasses, en particulier végétales, d'émulsifiant et d'alginate de sodium ; et,
      b) une solution de lactate de calcium pulvérisée sur ladite émulsion pour former un alginate de calcium insoluble et thermostable ;
   • une gaufrette enduite de cire de carnauba.

3. Procédé de fabrication selon la revendication 1 ou 2, caractérisé en ce que l'on ajoute à la garniture des adjuvants tels que du sucre, adjuvant de démoulage, gélifiant, arôme, épice.

4. Procédé selon l'une quelconque des revendications 1 à 3, caractérisé en ce que le produit obtenu est emballé sous film plastique puis stérilisé par pasteurisation, par étuvage ou sous infrarouge.

5. Procédé de fabrication selon la revendication 3, caractérisé en ce que l'adjuvant de démoulage (20) est à base d'émulsifiant alimentaire contenant de l'acide citrique et de l'eau.

6. Procédé de fabrication selon la revendication 3, caractérisé en ce que le mélange gélifiant (21) est composé d'alginate de pectine, de sucre, de sel, de calcium et d'eau.

7. Dispositif pour la mise en oeuvre du procédé selon l'une des revendications 1 à 6, caractérisé en ce qu'il est constitué d'au moins un moule (10) dont le diamètre de la partie inférieure (12) est inférieur au diamètre de la partie supérieure (11) et que cette variation de diamètre est réalisée dans un plan horizontal sur une faible hauteur de façon à obtenir un bord (13).

8. Dispositif selon la revendication 7, caractérisé en ce qu'il comprend en plus un deuxième moule (60) dont le diamètre est tel qu'il est supérieur au diamètre de la partie inférieure (12) du premier moule (10) et inférieur au diamètre d'une partie supérieure (11) du premier moule (10), de façon à reposer sur un bord (13) formé entre les parties supérieure (11) et inférieure (12) du premier moule (10).

9. Dispositif selon la revendication 8, caractérisé en ce que le deuxième moule est constitué en papier d'hostie.

10. Dispositif selon l'une des revendications 7 et 8, caractérisé en ce que les moules (10, 60) ont des formes tronconiques.

**Claims**

1. A process for the manufacture of an inverted tart comprising a tart bottom and a garnishing placed at the bottom of a mould, with a partition arranged between the garnishing and a paste, forming said tart bottom in order to limit exchanges between paste and garnishing, characterized in that :
   • a raw fruit base garnishing is placed at the bottom of the mould,
   • an impervious or made impervious partition is superimposed thereto ;
   • a soft and raw paste is superimposed thereto ;
   • the assembly is baked in the temperature range from about 180°C to 210°C during a period from 45 to 55 mn ;
   • the products are packed in their baking moulds,
   • the packed assembly is sterilized.

2. The process as recited in claim 1, characterized in that said impervious or made impervious partition comprises at least one of the following elements :
   • the bottom of a second mould made of a food type plastic material or of a metal coated, at least on the garnishing side, with a vinyl type plastic material layer ;
   • a host paper, both faces of which are covered with an hydrophobic system, said system comprising two parts :
      i) an emulsion of fatty materials, especially vegetable ones, of an emulsifying agent and sodium alginate, and
      ii) a calcium lactate solution which is sprayed on said emulsion to obtain an insoluble and thermostable calcium alginate ;
   • a wafer covered with carnauba wax.

3. The manufacturing process as recited in claim 1 or 2, characterized in that additives are added to said garnishing, such as sugar, turning-out additive, gelling agent, spice.

4. The process of any claims 1-3, characterized in that the product obtained is packed with a plastic film, and then sterilized through pasteurizing or stoving steps, or by infra-reds.

5. The manufacturing process as recited in claim 3, characterized in that said turning-out additive (20) is based on a food type emulsifying agent comprising citric acid and water.

6. The manufacturing process as recited in claim 3, characterized in that said gelling agent (21) comprises pectine alginate, sugar, salt, calcium and water.

7. A device for embodying the manufacturing process as recited in claims 1-6, characterized in that it includes at least a mould (10), the diameter of the lower portion (12) of which is less than the diameter of the upper portion (11), and in that this diameter difference is obtained in a horizontal plane along a small height in order to form an edge (13).

8. The device as recited in claim 7, characterized in that it further includes a second mould (60), the diameter of which is such that it is greater than the diameter of the lower portion (12) of said first mould (10) and less than the diameter of an upper portion (11) of said first mould, with a view to bearing on an edge (13) formed between the upper (11) and lower (12) portions of said first mould (10).

9. The device as recited in claim 8, characterized in that said second mould comprises host paper.

10. The device as recited in claims 7 and 8, characterized in that said moulds (10, 60) have truncated shapes.

**Patentansprüche**

1. Verfahren zur Herstellung einer umgekehrten Torte, bestehend aus einem Tortenboden und einer auf dem Boden einer Form angeordneten Füllung, wobei eine Trennschicht zwischen der Füllung und einem Teig angeordnet ist, die einen Teil des Tortenbodens bildet, um den Austausch zwischen dem Teig und der Füllung zu begrenzen, dadurch gekennzeichnet, daß

— eine Füllung auf der Grundlage roher Früchte auf dem Boden der Form angeordnet wird,

— darüber eine undurchlässige oder undurchlässig gemachte Trennschicht angeordnet wird,

— darüber ein weicher und roher Teig angeordnet wird,

— die gesamte Anordnung bei einer Temperatur zwischen etwa 180 und 210°C währen einer Dauer von etwa 45 bis 55 Min. gebacken wird,

— die Produkte in ihrer Form bzw. in ihren Formen verpackt werden, und

— die verpackte Anordnung sterilisiert wird.

2. Verfahren nach Anspruch 1, dadurch gekennzeichnet, daß die undurchlässige oder undurchlässig gemachte Trennschicht aus wenigstens einem der folgenden Elemente besteht :

— dem Boden einer zweiten Form aus einem plastischen Material mit Lebensmittelcharakteristik oder aus Metall, das wenigstens auf der Seite der Füllung mit einer Schicht aus plastischem Vinylmaterial überzogen ist,

— einer Oblate, die die beiden Seiten eines hydrophoben Systems umgibt, das aus zwei Teilen besteht, nämlich

a) einer Fettemulsion, insbesondere einer pflanzlichen, eines Natriumemulgats und -alginats, und

b) einer auf dieser Pulsion pulverisierten Kalziumlaktatlösung zur Bildung eines unlöslichen und wärmestabilen Calziumalginats, und

— einer Karnaubawachswaffel.

3. Verfahren nach Anspruch 1 oder 2, dadurch gekennzeichnet, daß der Füllung Zusatzstoffe wie Zucker, ein Entformungsmittel, ein Geliermittel, ein Aromastoff, oder ein Gewürzmittel zugesetzt werden.

4. Verfahren nach einer der Ansprüche 1 bis 3, dadurch gekennzeichnet, daß das erhaltene Produkt in einem Kuststoffilm verpackt und danach durch Pasteurisierung, Trocknung oder Infrarotbestrahlung sterilisiert wird.

5. Verfahren nach Anspruch 3, dadurch gekennzeichnet, daß der Entformungszusatzstoff (20) auf einem Lebensmittelemulgator basiert, der Zitronensäure und Wasser enthält.

6. Verfahren nach Anspruch 3, dadurch gekennzeichnet, daß das Geliergemisch (21) aus Pektinalginat, Zucker, Salz Calzium und Wasser besteht.

7. Vorrichtung zur Durchführung des Verfahrens nach einem der Ansprüche 1 bis 6, gekennzeichnet durch wenigstens eine Form (10), deren Durchmesser des unteren Teils (12) geringer ist als der Durchmesser des oberen Teils (11), und dadurch, daß diese Änderung in einer horizontalen Ebene in geringer Höhe zur Bildung eines Randes (13) erfolgt.

8. Vorrichtung nach Anspruch 7, gekennzeichnet durch eine zweite Form (60), deren Durchmesser größer als der Durchmesser des unteren Teils (12) der ersten Form (10) und geringer als der Durchmesser des oberen Teils (11) der ersten Form (10) ist, um auf einem Rand (13) aufzuliegen, der zwischen dem oberen und dem unteren Teil (11, 12) der ersten Form (10) gebildet ist.

9. Vorrichtung nach Anspruch 8, dadurch gekennzeichnet, daß die zweite Form aus einer Oblate besteht.

10. Vorrichtung nach Anspruch 7 oder 8, dadurch gekennhzeichnet, daß die Formen (10, 60) kegelstumpfförmig sind.

PL. UNIQUE

6